Europäisches Patentamt

European Patent Office

Office européen des brevets

(11) Veröffentlichungsnummer: **0 312 800 B1**

## (12) EUROPÄISCHE PATENTSCHRIFT

(45) Veröffentlichungstag der Patentschrift: **29.01.92**

(51) Int. Cl.⁵: **G01F 23/28**

(21) Anmeldenummer: **88115728.3**

(22) Anmeldetag: **23.09.88**

(54) **Sensor zur Erfassung des Flüssigkeitsstandes in einem Behälter.**

(30) Priorität: **19.10.87 DE 3735666**
**21.07.88 DE 3825047**

(43) Veröffentlichungstag der Anmeldung:
**26.04.89 Patentblatt 89/17**

(45) Bekanntmachung des Hinweises auf die
Patenterteilung:
**29.01.92 Patentblatt 92/05**

(84) Benannte Vertragsstaaten:
**DE FR GB IT NL SE**

(56) Entgegenhaltungen:
**DE-B- 1 208 089**
**US-A- 4 063 457**

(73) Patentinhaber: **SIEMENS AKTIENGESELL-
SCHAFT**
**Wittelsbacherplatz 2**
**W-8000 München 2(DE)**

(72) Erfinder: **Dünstl, Josef, Dipl.-Phys.**
**Von Netteler Strasse 4**
**W-8620 Lichtenfels(DE)**
Erfinder: **Schröppel, Ralph, Dipl.-Ing.**
**Wirsberger Strasse 16**
**W-8655 Neuenmarkt(DE)**
Erfinder: **Willner, Siegfried, Dipl.-Ing.**
**Am Hohlweg 5**
**W-8620 Lichtenfels(DE)**

Rank Xerox (UK) Business Services

## Beschreibung

Die Erfindung liegt auf dem Gebiet der Pegelanzeiger und ist bei der Ausgestaltung eines Sensors anzuwenden, mit dem unter Verwendung einer Ultraschallmeßstrecke der Flüssigkeitsstand in einem Behälter ermittelt wird.

Ein bekannter Sensor zur Erfassung des Flüssigkeitsstandes in einem Behälter besteht im wesentlichen aus vier Elementen, nämlich einem rohrförmigen Gehäuse, das mit einem Befestigungsflansch versehen ist und einen Innenraum aufweist, der über eine untere und eine obere Ausgleichsöffnung mit dem umgebenden Raum in Verbindung steht, weiterhin aus mehreren den Innenraum radial durchsetzenden Ultraschallmeßstrecken mit in der Gehäusewand jeweils paarweise angeordneten Ultraschallwandlern, ferner aus in der Gehäusewand zu den Elektroden führenden elektrischen Zuleitungen und aus einer Ansteuer- und Auswerteelektronik, die über die Zuleitungen mit den Ultraschallmeßstrecken verbunden ist (US-PS 4 063 457). Die Herstellung dieses bekannten Sensors ist recht aufwendig; bei Einsatz dieses Sensors in Behältern mit stark bewegter Flüssigkeit kann es zu Fehlanzeigen kommen.

Zur Erfassung des Flüssigkeitsstandes in einem Kraftfahrzeugtank ist im übrigen ein Anzeiger bekannt, der als Meßgeber einen Schwimmer aufweist, der in einem vertikalen Tauchrohr angeordnet ist. Zur Dämpfung der Bewegungen des Schwimmers bei stark bewegtem Flüssigkeitsspiegel ist in dem Tauchrohrboden ein Kanal angeordnet, der den Innenraum des Tauchrohres mit dem Tank verbindet. Dieser Kanal hat die Form von gegenläufigen Windungen oder die Form einer Spirale (DE-PS 12 08 089).

Ausgehend von einem Sensor mit den Merkmalen des Oberbegriffes des Patentanspruches 1 liegt der Erfindung die Aufgabe zugrunde, die Anzeigegenauigkeit des Sensors zu verbessern. Darüber hinaus sollen der konstruktive Aufwand für das Gehäuse und damit die Herstellungskosten des Sensors reduziert und die Ansteuer- und Auswerteelektronik vereinfacht werden, so daß insgesamt ein hochwertiger Sensor zu einem günstigen Preis zur Verfügung steht.

Zur Lösung der genannten Aufgabe ist gemäß der Erfindung vorgesehen, daß das Gehäuse aus zwei miteinander verbundenen Halbschalen aus Kunststoff besteht, wobei jede Halbschale einen Ultraschallwandler der Ultraschallmeßstrecke mit den zugehörigen elektrischen Zuleitungen umschließt, und daß im Bereich unterhalb der Ultraschallmeßstrecke ineinandergreifende Wandteile der Halbschalen den engen Kanal bilden, der den Innenraum des Gehäuses mit der unteren Ausgleichsöffnung verbindet.

Bei einer derartigen Ausgestaltung des Sensors ist gewährleistet, daß sich auch bei schnellen oder häufigen Bewegungen bis hin zu turbulenzartigen Bewegungen der Flüssigkeit in dem Behälter im Innenraum des Gehäuses ein gleichbleibender oder sich nur langsam verändernder Pegelstand, also ein stabiles Flüssigkeitsniveau ergibt, wodurch Fehlanzeigen ausgeschlossen sind. Der vorgesehene enge Kanal bewirkt dabei einen mechanisch gedämpften Pegelausgleich zwischen dem Innenraum des Gehäuses und dem übrigen Behälterraum. - Die vorgesehene Ausgestaltung des Sensors ermöglicht es, die Wandlerelemente der Ultraschallmeßstrecke bzw. der Ultraschallmeßstrecken bei der Herstellung der Kunststoffhalbschalen durch Gießen oder Spritzen in die Halbschalen einzukapseln, wodurch sich weitere Montageschritte bei der Zusammensetzung des Gehäuses erübrigen. Die Verbindung der beiden Halbschalen kann auf einfache Weise stoff- oder formschlüssig erfolgen, beispielsweise durch Verkleben, Ultraschallschweißung, Verklammerung oder Nietverbindung. Insbesondere können die beiden Halbschalen an ihrem einen Ende steckbar und an ihrem anderen Ende schnappbar miteinander verbunden sein. Hierzu kann die Steckverbindung aus einem Zapfen und einer Öse bestehen, die in Achsrichtung des Gehäuses ineinander greifen; die Schnappverbindung besteht zweckmäßig aus einem Druckknopf, dessen Teile quer zur Achsrichtung des Gehäuses ineinandergreifen. Eine solche Verbindung ist montagemäßig besonders einfach zu handhaben und ist auch einem automatischen Fertigungsprozeß zugänglich. Die erforderliche Abdichtung des Innenraumes läßt sich dabei durch elastische Verspannung beider Halbschalen infolge entsprechender Ausgestaltung der Steckverbindung und der ineinandergreifenden Wandteile erzielen.

Ein gemäß der Erfindung ausgestalteter Sensor ist insbesondere in Kraftfahrzeugen zur Pegelanzeige des Motoröles verwendbar. Hierzu empfiehlt es sich im übrigen, oberhalb des Innenraums eine zweite Ultraschallmeßstrecke anzuordnen, die über einen entsprechenden Durchbruch in der Gehäusewandung direkt mit dem umgebenden Raum in Verbindung steht. Dadurch ist die Möglichkeit gegeben, auch einen weiteren Pegel zu überwachen, was in aller Regel bei stillstehendem Motor erfolgt. Daher ist für diese Grenzwerterfassung ein gedämpfter Pegelausgleich nicht erforderlich. - Weitere innerhalb des erwähnten Grenzbereiches gegebenenfalls interessierende Pegelstände können in bekannter Weise durch die Anordnung weiterer Ultraschallmeßstrecken innerhalb oder oberhalb des Innenraumes des Gehäuses erfaßt werden.

Die Bildung des engen Kanals durch die ineinandergreifenden Wandteile der beiden Kunststoffhalbschalen erfolgt zweckmäßig in der Weise, daß der Kanal aus wenigstens einem seitlich zum Innenraum verlaufenden, aufsteigenden oder absteigenden Kanalstück besteht. Man kann aber auch einen labyrinthartigen Kanal vorsehen, der im einfachsten Fall dadurch gebildet ist, daß zwei inneinandergreifende Wandteile der beiden Halbschalen ein aufsteigendes und ein absteigendes Kanalstück bilden, die an ihren oberen Enden miteinander verbunden sind. Man kann einen labyrinthartigen Kanal aber auch dadurch schaffen oder den vorhandenen dadurch verlängern, daß ein absteigendes Kanalstück auf der einen Seite des Innenraumes mit einem aufsteigenden Kanalstück auf der anderen Seite des Innenraumes an ihren unteren Enden über einen unterhalb des Innenraumes angeordneten Tunnel miteinander verbunden sind. Bei dieser Ausgestaltung besteht der enge Kanal aus zwei oder mehreren aneinandergereihten Abschnitten, wobei die wirksame Länge des Kanals durch zwei radiale Öffnungen (Bohrungen), die die Wandung der Halbschalen ganz oder teilweise durchdringen, auf jede beliebige Länge zwischen Null und der Maximallänge festgelegt werden kann. Dadurch ist der Sensor an unterschiedliche Anforderungen bezüglich der Dämpfung des Pegelausgleiches anpaßbar. Eine erste Bohrung, die durch die Wandung des Gehäuses hindurch von außen bis zu dem aufsteigenden oder dem absteigenden Kanalstück auf der einen Seite reicht, bildet dann die untere Ausgleichs-Öffnung des Sensors. Zur Verbindung des Innenraumes mit dem engen Kanal ist eine zweite Bohrung erforderlich, die von innen her bis zum absteigenden oder zum aufsteigenden Kanalstück auf der einen oder der anderen Seite reicht. Je nach Höhenlage und Position (auf- oder absteigendes Kanalstück) dieser beiden Öffnungen ergibt sich dann die wirksame Länge des engen Kanals.

Eine weitere Möglichkeit zur Bildung des engen Kanals besteht darin, daß dieser aus wenigstens einem von der unteren Ausgleichsöffnung zum Innenraum aufsteigenden Kanalstück besteht. Bei dieser Ausgestaltung ist der enge Kanal im wesentlichen unterhalb des die Ultraschallmeßstrecke aufnehmenden Innenraums angeordnet; demzufolge kann der gesamte unterhalb dieses Innenraums zur Verfügung stehende Raum für die Ausgestaltung des engen Kanals verwendet werden. Insbesondere ist dadurch die Möglichkeit gegeben, daß die ineinander greifenden Wandteile der beiden Halbschalen zwei aufsteigende Kanalstücke und ein die beiden aufsteigenden Kanalstücke miteinander verbindendes absteigendes Kanalstück bilden, wobei das absteigende Kanalstück einen größeren Querschnitt als die beiden aufsteigenden Kanalstücke aufweisen kann. In diesem Fall kann das absteigende Kanalstück zur Vergrößerung des Strömungswiderstandes mit wenigstens zwei Stegen versehen sein, die von zwei gegenüberliegenden Kanalseiten ausgehend kammartig ineinandergreifen. - Die Anpassung des Strömungswiderstandes des engen Kanals kann im übrigen auch dadurch erfolgen, daß zwischen dem absteigenden Kanalstück und einem oder beiden aufsteigenden Kanalstücken eine Öffnung vorgesehen ist. Dadurch wird der Strömungsweg sowohl in dem jeweiligen aufsteigenden Kanalstück als auch in dem absteigenden Kanalstück verkürzt. - Weiterhin kann es zweckmäßig sein, daß das zum Innenraum führende aufsteigende Kanalstück nicht bereits am Boden des Innenraums sondern erst unmittelbar unterhalb der Ansprechschwelle der Ultraschallmeßstrecke in den Innenraum mündet. Dadurch erhält man unterhalb der Ultraschallmeßstrecke einen Bereich des Innenraumes, der stets mit Flüssigkeit gefüllt ist, so daß auch bei schräger Stellung des Behälters eine genaue Anzeige des Sensors gewährleistet ist.

Bezüglich der Einbettung der Ultraschallwandler und der zugehörigen elektrischen Zuleitungen in die Kunststoffhalbschalen empfiehlt sich eine Ausgestaltung, bei der in jeder Kunststoffhalbschale der bzw. die Ultraschallwandler und die elektrischen Zuleitungen an einem Tragelement fixiert sind. Das erleichtert die Positionierung der Ultraschallwandler und der elektrischen Zuleitungen in der Spritzform zur Herstellung der Kunststoffhalbschalen. Dabei kann man auch so vorgehen, daß in jeder Kunststoffhalbschale die elektrischen Zuleitungen selbst ein Tragelement für den bzw. die Ultraschallwandler bilden. Die Zuleitungen sind dann beispielsweise als Draht, Stift oder gestanzter Blechstreifen ausgebildet.

In weiterer Ausgestaltung der Erfindung ist bezüglich der Ansteuer- und Auswerteelektronik vorgesehen, daß die Ansteuerelektronik einen Taktgenerator enthält, mit dem an der Sendeelektrode der jeweiligen Meßstrecke ein Spannungsimpuls mit einer Impulsdauer von etwa 0,5 bis 10 $\mu$s erzeugt wird. Dabei liegt die Impulsfrequenz zweckmäßig bei 0,05 bis 10 kHz. Mit einer derartigen Ansteuerung der Sendewandler kann auf einen Frequenzgenerator mit Frequenzmodulation verzichtet werden. Ein weiterer Vorteil ist darin zu sehen, daß Änderungen der Resonanzfrequenz des Sensors, die durch Temperatur und/oder Streuung bedingt sind, aufgrund der Einzelimpulsanregung der Sendewandler ohne Bedeutung sind.

Zwei Ausführungsbeispiele des neuen Sensors sind in den Figuren 1 bis 5 und 6 bis 10 dargestellt. Dabei zeigt

Figur 1 eine Gesamtansicht eines Sensors,

Figur 2 einen Längsschnitt durch das rohrförmige Gehäuse,

Figur 3 einen Querschnitt durch das Gehäuse im Bereich der Ultraschallmeßstrecke,

Figur 4 einen Querschnitt durch das Gehäuse im Bereich des engen Kanals und

Figur 5 eine Frontansicht der Innenseite einer Halbschale des Gehäuses.

Figur 6 zeigt in Frontansicht und

Figur 7 im Längsschnitt die eine Halbschale des zweiten Ausführungsbeispieles,

Figur 8 im Längsschnitt und Figur 9 in Frontansicht die andere Halbschale und

Figur 10 einen Querschnitt durch beide Halbschalen im Bereich des engen Kanals.

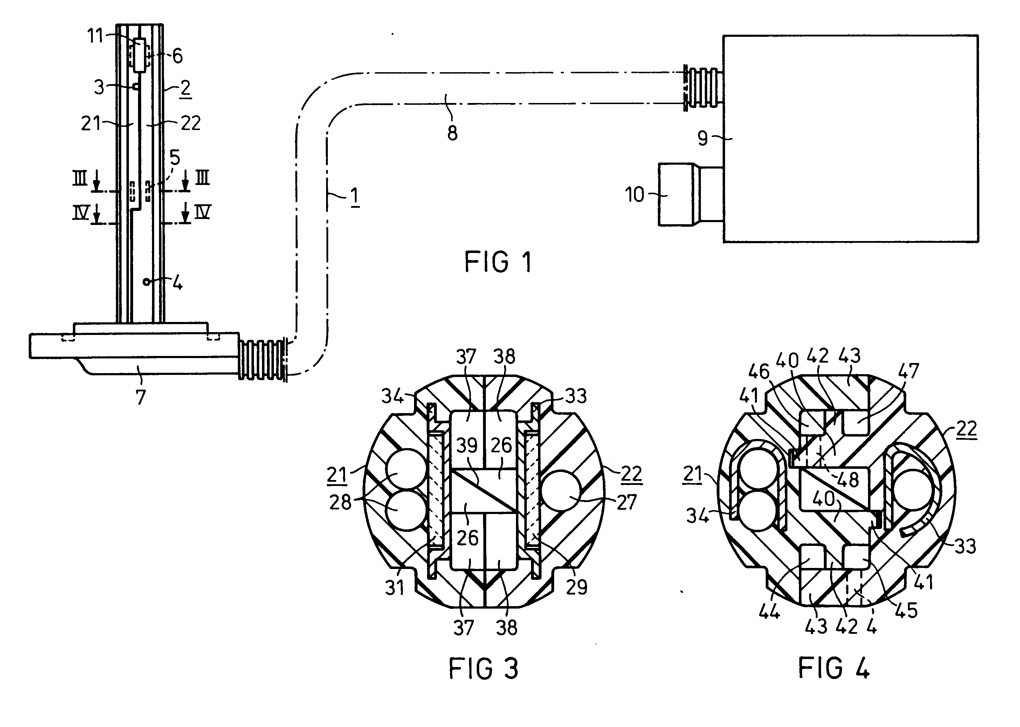

Gemäß Figur 1 besteht der Sensor 1 aus dem rohrförmigen Gehäuse 2 mit dem unten angeordneten Befestigungsflansch 7, einem Verbindungsschlauch 8 zur Aufnahme elektrischer Verbindungsleitungen und dem Gehäuse 9 mit einer Ansteuer- und Auswerteelektronik und dem Steckeranschluß 10. Das rohrförmige Gehäuse 2 besteht aus den beiden Halbschalen 21 und 22, die einen hier nicht näher bezeichneten Innenraum bilden. Dieser Innenraum ist durch die obere Ausgleichsöffnung 3 und die untere Ausgleichsöffnung 4 mit dem umgebenden Raum verbunden. Etwa auf der halben Länge des Gehäuses 2 ist eine Ultraschallmeßstrecke 5 angeordnet, während eine gleichartige Meßstrecke 6 am oberen Ende des Gehäuses im Bereich des Durchbruches 11 angeordnet ist.

Gemäß Figur 2 bilden die beiden Halbschalen 21 und 22, bei denen es sich um gleichartig ausgebildete Kunststoffspritzteile handelt, einen Innenraum 23, der von den Wänden der beiden Halbschalen sowie den oberen Querstegen 24 und 25 sowie einem unteren Quersteg 26 der Halbschale 22 und einem nicht dargestellten entsprechenden Quersteg der Halbschale 21 begrenzt wird. In die beiden Halbschalen sind elektrische Zuleitungen 27 und 28 eingebettet, die zu den Sendewandlern 29 und 30 und den Empfangswandlern 31 und 32 führen. Die Wandler der beiden Ultraschallmeßstrecken und die elektrischen Zuleitungen befinden sich auf Tragkörpern 33 und 34, bei denen es sich um Blechteile handelt.

Unterhalb des Innenraums 23 ist ein Tunnel 35 vorgesehen, der über einen Schlitz 36 in der Halbschale 22 und über einen entsprechenden Schlitz in der Halbschale 21 Kanalstücke eines in den Figuren 3 bis 5 näher dargestellten engen Kanals miteinander verbindet. Über diesen Kanal kommuniziert der Innenraum 23 durch die untere Ausgleichsöffnung hindurch mit dem umgebenden Raum.

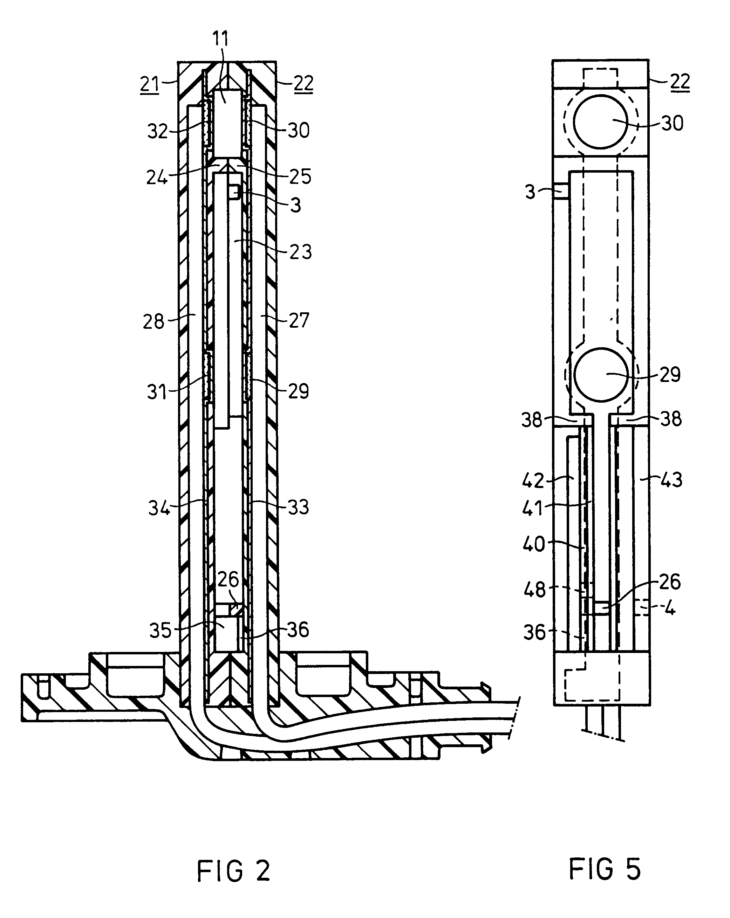

Gemäß Figur 3, einem Querschnitt im Bereich der Ultraschallmeßstrecke 5, ist der Innenraum des Gehäuses 2 durch nach innen ragende Querstege 37 und 38 (s. auch Figur 5) in einen oberen Raum und einen unteren Raum unterteilt. Durch die verbleibende Öffnung zwischen den Querstegen ist die Nahtstelle 39 zwischen dem unteren Quersteg 26 der Halbschale 22 und dem entsprechenden Quersteg der Halbschale 21 erkennbar. Weiterhin sind die elektrische Zuleitung 27 zu den beiden Sendewandlern 29 bzw. 30 und die elektrischen Zuleitungen 28 zu den beiden Empfangswandlern 31 bzw. 32 zu sehen.

Gemäß Figur 4 und 5 sind unterhalb der Querstege 37 und 38 die Wandteile der beiden Halbschalen 21 und 22 in spezieller Weise ausgeformt. Jede Halbschale weist eine Innenwand 40 auf, die mit einem Ansatz 41 in die andere Halbschale eingreift und mit einem seitlichen Steg 42 versehen ist. Die weiterhin vorgesehene Außenwand 43 der einen Halbschale bildet jeweils mit der Innenwand 40 und dem seitlichen Steg 42 der anderen Halbschale Kanalabschnitte 44 und 45 bzw. 46 und 47. Da der seitliche Steg 42 gemäß Figur 5 jeweils unterhalb des Quersteges 37 bzw. 38 endet, sind die beiden Kanalabschnitte 44 und 45 bzw. 46 und 47 an ihrem oberen Ende miteinander verbunden. Am unteren Ende des Kanalabschnittes 44 und 46 ist unterhalb der unteren Querstege 26 der Schlitz 36 (s. auch Figur 2) vorgesehen, so daß die Kanalabschnitte 45 und 47 über den Tunnel 35 (Figur 2) miteinander verbunden sind. - Durch die Außenwand 43 der Halbschale 22 ist eine Bohrung 4 geführt, die die untere Ausgleichsöffnung des Innenraumes 23 bildet. Eine gleichartige Bohrung 48 durchdringt die Innenwand 40 der Halbschale 22. Demzufolge ist der Außenraum über die Bohrung 4, den nach oben verlaufenden Kanalabschnitt 45, den anschließend nach unten verlaufenden Kanalabschnitt 44, den Tunnel 35, den nach oben steigenden Kanalabschnitt 47, den nach unten verlaufenden Kanalabschnitt 46 und die Bohrung 48 mit dem unteren Teil des Innenraums 23 verbunden. - Die vier Kanalabschnitte 44 bis 47 bilden somit einen engen Kanal von rechteckigem, vorzugsweise quadratischem Querschnitt. Die Querschnittsfläche beträgt etwa 0,5 bis 4 $mm^2$, abhängig von der Viskosität der jeweiligen Flüssigkeit und auch von der erwünschten Dämpfung des Pegelausgleiches.

Bei dem Ausführungsbeispiel gemäß Figur 1 bis 5 ist der Befestigungsflansch 7 am unteren Ende des Gehäuses 2 angeordnet. Er kann auch am oberen Ende des Gehäuses angeordnet sein, um dieses von oben an einem Behälter befestigen zu können. In jedem Fall ist bei der Herstellung des Befestigungsflansches durch Anspritzen oder anderweitige Anformung auf eine dichte Verbindung zwischen dem Gehäuse und den austretenden elektrischen Zuleitungen einerseits und dem Befestigungsflansch andererseits zu achten.

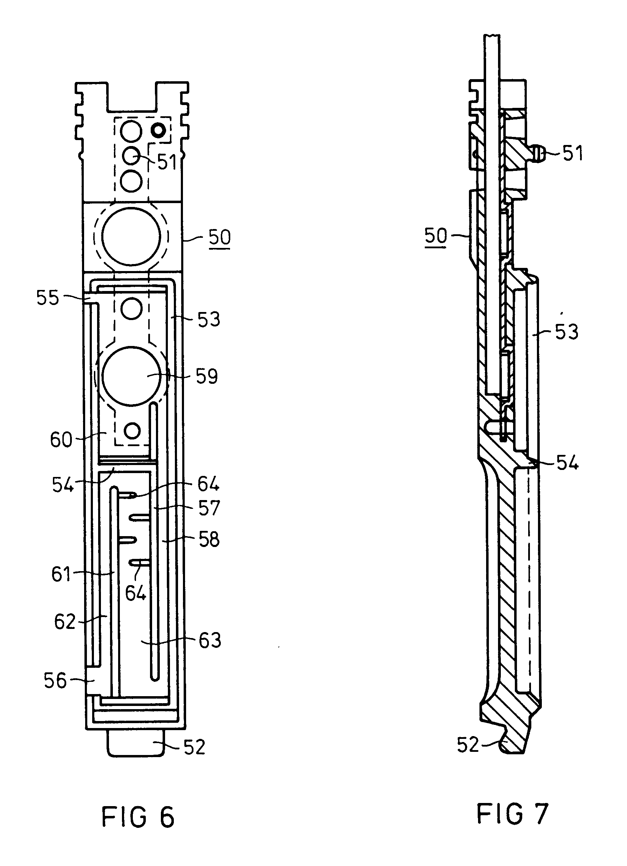

Die Figuren 6 und 7 zeigen eine Halbschale, die an ihrem oberen Ende zum Anspritzen eines Befestigungsflansches vorbereitet ist und die unmittelbar darunter mit einem Druckknopfteil 51 und am unteren Ende mit einer Nase 52 versehen ist.

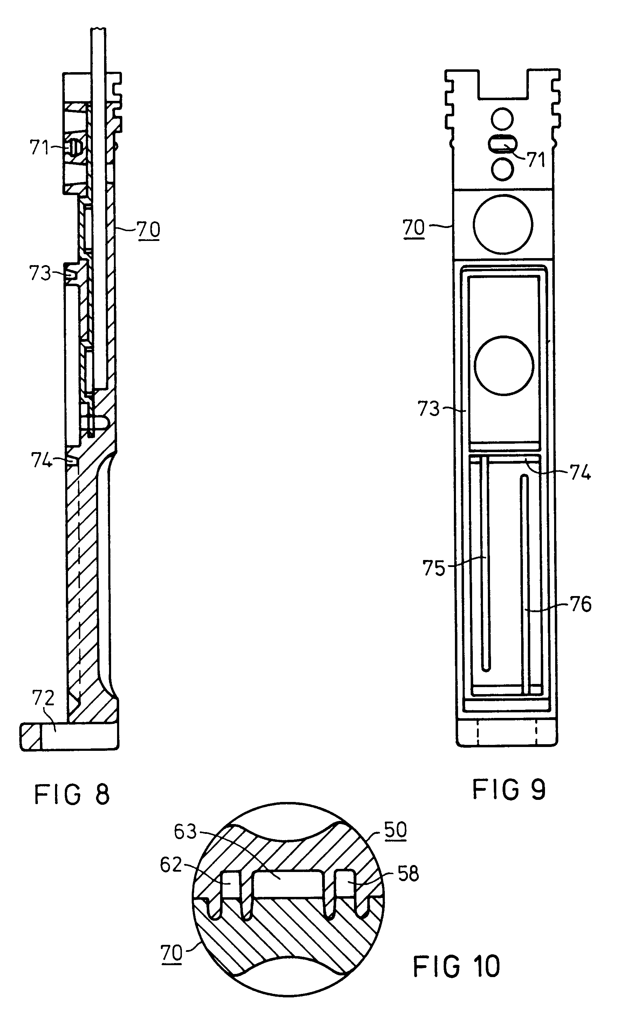

Die Halbschale 50 weist weiterhin einen umlaufenden Steg 53 auf, wobei im Bereich dieses Steges eine obere Ausgleichsöffnung 55 und eine untere Ausgleichsöffnung 56 vorgesehen ist. Innerhalb des umlaufenden Steges 53 ist weiterhin ein Längssteg 57 und ein diesen Längssteg mit dem umlaufenden Steg verbindender Quersteg 54 vorgesehen. Der Quersteg 54 begrenzt einen im Zusammenwirken mit der in den Figuren 8 und 9 dargestellten zweiten Halbschale 70 gebildeten Innenraum nach unten. Der Längssteg 57 und der umlaufende Steg 53 bilden zwischen sich ein Kanalstück 58, das am oberen Ende unmittelbar unterhalb der Ansprechschwelle des Wandlerelementes 59 endet. Da das obere Ende des Längssteges 57 über den Quersteg 54 hinausragt, befindet sich unterhalb des Wandlerelementes 59 ein sackartiger Bereich 60, der beim Betrieb des Sensors stets mit Flüssigkeit gefüllt ist.

Im unteren Teil der Halbschale 50 ist ein weiterer Längssteg 61 vorgesehen, durch den einerseits zwischen dem Längssteg 61 und dem umlaufenden Steg 53 das aufsteigende Kanalstück 62 und andererseits zwischen dem Längssteg 61 und dem Längssteg 57 das absteigende Kanalstück 63 unterhalb des Quersteges 54 gebildet wird. In das Kanalstück 63 ragen sowohl vom Längssteg 57 als auch vom Längssteg 61 Seitenstege 64 hinein, die zahnförmig ineinander greifen.

Als Gegenstück zur Halbschale 50 dient die in den Figuren 8 und 9 in Ansicht und im Längsschnitt dargestellte Halbschale 70, die am oberen Ende mit einem Druckknopfteil 71 und am unteren Ende mit einer Öse 72 und im übrigen mit einer umlaufenden Nut 73, einer Quernut 74 und zwei Längsnuten 75 und 76 versehen ist. Die Nase 52 der Halbschale 50 ist leicht rückwärts geneigt, um diese Nase auf einfache Weise in die Öse 72 der Halbschale 70 einführen zu können. Zugleich wird mittels dieser Ausgestaltung beim Verbinden der beiden Druckknopfteile 51 und 71 zwischen den beiden Halbschalen ein Anpreßdruck erzeugt, der bei leicht gewölbter Ausgestaltung der aneinander grenzenden Flächen der beiden Halbschalen zu einer elastischen Verspannung der beiden Halbschalen führt.

Im zusammengesetzten Zustand der beiden Halbschalen 50 und 70 wird von den ineinandergreifenden umlaufenden Stegen und Nuten sowie den Längsstegen und Längsnuten ein enger Kanal gebildet, der aus den Kanalstücken 58, 62 und 63 besteht. Dabei sind Längssteg 61 und Längsnut 75 so ausgebildet, daß sie unterhalb des Quersteges 54 und der Quernut 74 enden, während der Längssteg 57 und die Längsnut 76 oberhalb des unteren Querstückes des umlaufenden Steges 53 bzw. der umlaufenden Nut 73 enden.

## Patentansprüche

1. Sensor zur Erfassung des Flüssigkeitsstandes in einem Behälter, bestehend

   - aus einem stab- oder rohrförmigen Gehäuse (2) mit einem Befestigungsflansch (7) und mit einem Innenraum (23), der über eine obere (3) und eine untere Ausgleichsöffnung (4) mit dem umgebenden Raum in Verbindung steht,

   - aus wenigstens einer den Innenraum (23) radial durchsetzenden Ultraschallmeßstrecke (5) mit in der Gehäusewand paarweise angeordneten Ultraschallwandlern (29,31) und

   - aus einer Ansteuer- und Auswerteelektronik, die über elektrische Zuleitungen (27,28), die in der Gehäusewand zu den Ultraschallwandlern führen, mit der Ultraschallmeßstrecke (5) verbunden ist, **dadurch gekennzeichnet,**

   daß das Gehäuse (2) aus zwei miteinander verbundenen Halbschalen aus Kunststoff (21,22) besteht, wobei jede Halbschale einen Ultraschallwandler (29,31) der Ultraschallmeßstrecke (5) mit den zugehörigen elektrischen Zuleitungen (27,28) umschließt, und daß im Bereich unterhalb der Ultraschallmeßstrecke (5) ineinander greifende Wandteile (42,43) der Halbschalen (21,22) einen in Achsrichtung des Gehäuses verlaufenden engen Kanal 44,45,46,47) bilden, der den Innenraum (23) des Gehäuses (2) mit der unteren Ausgleichsöffnung (4) verbindet.

2. Sensor nach Anspruch 1, **dadurch gekennzeichnet,** daß der enge Kanal aus wenigstens einem seitlich zum Innenraum verlaufenden, aufsteigenden (45, 47) oder absteigenden (44, 46) Kanalstück besteht.

3. Sensor nach Anspruch 2, **dadurch gekennzeichnet,** daß der enge Kanal über je eine radiale Öffnung (Bohrung) (4,48) mit dem Innenraum (23) und mit dem umgebenden Raum verbunden ist.

4. Sensor nach Anspruch 1, **dadurch gekennzeichnet,** daß der enge Kanal aus wenigstens einem von der unteren Ausgleichsöffnung (56) zum Innenraum aufsteigenden Kanalstück (58) besteht.

5. Sensor nach Anspruch 4, **dadurch gekennzeichnet,** daß die ineinandergreifenden Wandteile der beiden Halbschalen (50,70) zwei aufsteigende Kanalstücke (58,62) und ein die beiden aufsteigenden Kanalstücke miteinander verbindendes absteigendes Kanalstück (63) bilden.

6. Sensor nach Anspruch 5, **dadurch gekennzeichnet,** daß das zum Innenraum führende aufsteigende Kanalstück (58) unmittelbar unterhalb der Ansprechschwelle der Ultraschallmeßstecke (5) mündet.

7. Sensor nach Anspruch 2 oder 4, **dadurch gekennzeichnet,** daß die beiden Halbschalen (50,70) an ihrem einen Ende steckbar (52,72) und an ihrem anderen Ende schnappbar (51,71) miteinander verbunden sind.

8. Sensor nach Anspruch 2 oder 4, **dadurch gekennzeichnet,** daß oberhalb des Innenraums (23) eine zweite Ultraschallmeßstrecke (6) angeordnet ist, die über einen entsprechenden Durchbruch (11) in der Gehäusewandung direkt mit dem umgebenden Raum in Verbindung steht.

## Claims

1. Sensor for determining the fluid level in a tank, composed
    - of a rod-shaped or tubular housing (2) with a fastening flange (7) and with an interior space (23) which is in communication with the surrounding space via an upper (3) and a lower compensating opening (4),
    - of at least one ultrasound measured distance (5) radially penetrating the interior space (23) with ultrasound transducers (29, 31) arranged in pairs in the housing wall, and
    - of control and evaluation electronics which are connected to the ultrasound measured distance (5) via electrical leads (27, 28) which lead in the housing wall to the ultrasound transducers,
    characterised in that the housing (2) is composed of two half shells made of plastic (21, 22) joined to one another, each half shell surrounding an ultrasound transducer (29, 31) of the ultrasound measured distance (5) with the associated electrical leads (27, 28), and in that, in the region below the ultrasound measured distance (5), interengaging wall parts (42, 43) of the half shells (21, 22) form a narrow channel (44, 45, 46, 47) which proceeds in the axial direction of the housing and connects the interior space (23) of the housing (2) to the lower compensating opening (4).

2. Sensor according to Claim 1, characterised in that the narrow channel is composed of at least one ascending (45, 47) or descending (44, 46) channel section proceeding laterally with respect to the interior space.

3. Sensor according to Claim 2, characterised in that the narrow channel is connected to the interior space (23) and to the surrounding space via a radial opening (bore) (4, 48) in each case.

4. Sensor according to Claim 1, characterised in that the narrow channel is composed of at least one channel section (58) ascending from the lower compensating opening (56) to the interior space.

5. Sensor according to Claim 4, characterised in that the interengaging wall parts of the two half shells (50, 70) form two ascending channel sections (58, 62) and one descending channel section (63) connecting the two ascending channel sections to one another.

6. Sensor according to Claim 5, characterised in that the ascending channel section (58) leading to the interior space emerges directly below the response threshold of the ultrasound measured distance (5).

7. Sensor according to Claim 2 or 4, characterised in that the two half shells (50, 70) are joined to one another at their one end by means of a plug fastening (52, 72) and at their other end by means of a snap fastening (51, 71).

8. Sensor according to Claim 2 or 4, characterised in that there is arranged above the interior space (23) a second ultrasound measured distance (6) which is in direct communication with the surrounding space via a corresponding passage (11) in the housing wall.

## Revendications

1. Capteur de détection du niveau du liquide dans un réservoir, constitué
    - d'une enveloppe (2) en forme de barreau ou de tube, ayant une bride de fixation (7) et une chambre intérieure (23) qui communique avec l'espace environnant par un orifice supérieur (3) et par un orifice inférieur (4) d'égalisation,
    - d'au moins une section de mesure par ultrasons (5) traversant radialement la chambre intérieure (23), avec des transducteurs ultrasonores (29, 31) montés par paire dans la paroi de l'enveloppe, et

- d'une électronique d'attaque et d'exploitation, qui est reliée à la section de mesure par ultrasons (5) par des conducteurs électriques d'alimentation (27, 28) qui mènent dans la paroi de l'enveloppe aux transducteurs ultrasonores,

caractérisé

en ce que l'enveloppe (2) est constituée de deux hémi-coquilles (21, 22) en matière plastique et reliées entre elles, chaque hémi-coquille entourant un transducteur ultrasonore (29, 31) de la section de mesure par ultrasons (5), avec les conducteurs électriques d'alimentation associés (27, 28) et en ce que, dans la région située en-dessous de la section de mesure par ultrasons (5), des parties de paroi (42, 43) des hémi-coquilles (21, 22), qui viennent en prise entre elles, forment un canal étroit (44, 45, 46, 47), qui s'étend dans la direction axiale du corps et qui met la chambre intérieure (23) de l'enveloppe (2) en communication avec l'orifice inférieur d'égalisation (4).

2.  Capteur suivant la revendication 1, caractérisé en ce que le canal étroit est constitué d'au moins un tronçon de canal ascendant (45, 47) ou descendant (44, 46), qui s'étend latéralement à la chambre intérieure.

3.  Capteur suivant la revendication 2, caractérisé en ce que le canal étroit communique avec la chambre intérieure (23) et avec l'espace environnant, respectivement par un orifice (perçage) radial (4, 48).

4.  Capteur suivant la revendication 1, caractérisé en ce que le canal étroit est constitué d'au moins un tronçon de canal (58) ascendant de l'orifice inférieur d'égalisation (56) vers la chambre intérieure.

5.  Capteur suivant la revendication 4, caractérisé en ce que les parties de paroi, venant en prise entre elles, des deux hémi-coquilles (50, 70) forment deux tronçons de canal ascendants (58, 62) et un tronçon de canal (63) descendant, mettant ces deux tronçons de canal ascendants en communication l'un avec l'autre.

6.  Capteur suivant la revendication 5, caractérisé en ce que le tronçon de canal (58) ascendant et menant à la chambre intérieure débouche juste en-dessous du seuil de réponse de la section de mesure par ultrasons (5).

7.  Capteur suivant la revendication 2 ou 4, caractérisé en ce que les deux hémi-coquilles (50, 70) sont reliées l'une à l'autre, à une extrémité par enfichage (52, 72), et à leur autre extrémité par encliquetage (51, 71).

8.  Capteur suivant la revendication 2 ou 4, caractérisé en ce qu'au-dessus de la chambre intérieure (23) est prévue une seconde section de mesure par ultrasons (6), qui communique directement avec l'espace environnant, par une ouverture (11) adéquate ménagée dans la paroi de l'enveloppe.

FIG 1

FIG 3

FIG 4

EP 0 312 800 B1

FIG 2

FIG 5

FIG 6

FIG 7

FIG 8

FIG 9

FIG 10